Europäisches Patentamt

European Patent Office

Office européen des brevets

(19)

(11) Veröffentlichungsnummer : **0 478 529 A2**

(12)

# EUROPÄISCHE PATENTANMELDUNG

(21) Anmeldenummer : **91890182.8**

(22) Anmeldetag : **16.08.91**

(51) Int. Cl.$^5$ : **G01H 1/00**

(30) Priorität : **25.09.90 AT 1934/90**

(43) Veröffentlichungstag der Anmeldung :
**01.04.92 Patentblatt 92/14**

(84) Benannte Vertragsstaaten :
**BE CH DE DK ES FR GB GR IT LI LU NL SE**

(71) Anmelder : **DR. ING. GEISLINGER & CO. SCHWINGUNGSTECHNIK GESELLSCHAFT M.B.H.**
**Mayrwies-Esch 340**
**A-5023 Salzburg (AT)**

(72) Erfinder : **Pfeifer, Peter, Dipl.-Ing.**
**Borromäumstrasse 20**
**A-5020 Salzburg (AT)**

(74) Vertreter : **Hübscher, Heiner, Dipl.-Ing. et al**
**Spittelwiese 7**
**A-4020 Linz (AT)**

(54) **Überwachungseinrichtung zur Überwachung drehschwingungsbedingter Zustandsgrössen einer Antriebsanlage.**

(57)    Eine Antriebsanlage umfaßt einen Drehschwingungsdämpfer (1) bzw. eine drehelastische Kupplung, der bzw. die zwischen relativ zueinander verdrehbaren Innen- und Außenteilen (2, 3) angeordnete Federelemente (4) aufweisen.

Zur ständigen Überwachung drehschwingungsbedingter Zustandsgrößen dieser Antriebsanlage ist dem Innenteil (2) und dem Außenteil (3) des Dämpfers (1) bzw. der Kupplung jeweils wenigstens ein an einen Rechner (7) angeschlossener Meßwertgeber (8, 9) zur Bestimmung der absoluten Verdrehung von Innen- bzw. Außenteil (2, 3) zugeordnet, welcher Rechner (7) einerseits die eingelesenen Meßwerte des Innenteils (2) als Istmaß für die Drehwechselspannung einer Abtriebswelle mit einem eingespeicherten Spannungs-Grenzwert und/ oder anderseits den Differenzwert der eingelesenen Meßwerte von Innen- und Außenteil (2, 3) als Istmaß für den Federweg der Federelemente (4) mit einem eingespeicherten Federweg-Grenzwert vergleicht und beim Überschreiten des einen und/oder anderen Grenzwertes ein Alarmsignal auslöst.

EP 0 478 529 A2

Die Erfindung bezieht sich auf eine Überwachungseinrichtung zur Überwachung drehschwingungsbedingter Zustandsgrößen einer einen Drehschwingungsdämpfer bzw. eine drehelastische Kupplung umfassenden Antriebsanlage, welcher Dämpfer bzw. welche Kupplung zwischen relativ zueinander verdrehbaren Innen- und Außenteilen angeordnete Federelemente aufweisen.

Antriebsanlagen, in denen durch Drehmomentenstöße auf der An- und/oder Abtriebsseite Drehschwingungen auftreten, sind auch Drehwechselspannungen ausgesetzt, die zu Dauerbrüchen von Antriebsteilen führen können, was umso gefährlicher ist, je näher die Drehschwingungen einer Resonanz kommen. Drehschwingungsdämpfer und drehelastische Kupplungen sollen daher in diesen Anlagen die Drehschwingungen und damit die Drehwechselspannungen niedrig halten, und da die Betriebssicherheit dann von der einwandfreien Funktion der Dämpfer bw. Kupplungen abhängt, ist deren Überwachung Voraussetzung für das Erreichen der gewünschten Gesamtlebenszeit der Anlagen.

Solche Antriebsanlagen werden nun vor allem im Schiffbau eingesetzt, wo Betriebszeiten von etwa 50.000 Stunden zu erwarten sind und die Dämpfer bzw. Kupplungen und auch die anderen Antriebsteile beträchtliche Dimensionen erreichen. Die Überwachung dieser Anlagen ist daher überaus aufwendig und schwierig, denn sie verlangt nämlich bisher ein Zerlegen des Dämpfers bzw. der Kupplung und dann eine visuelle Inspektion, was, abgesehen vom Aufwand des Zerlegens, ein Stillegen der Anlage erfordert und auch nur einen Augenblickszustand zu überprüfen erlaubt, der keine Sicherheit für die korrekte Anlagenfunktion bis zu einer nächsten Inspektion mit sich bringt.

Bei Schiffsantrieben werden außerdem von Klassifikationsgesellschaften maximal zulässige Belastungsgrenzen für Antriebsteile u. dgl. vorgegeben und so gelten auch für die Drehwechselspannungen in einer Propellerwelle entsprechende Grenzwerte, die zu keiner Zeit überschritten werden dürfen. Das direkte Messen einer Drehwechselspannung ist aber praktisch nur durch an der Meßstelle aufzuklebende Dehnmeßstreifen möglich, so daß es auch hier wegen der während eines jahrelangen Betriebes instabilen Wirkung der Dehnmeßstreifen und ihrer drahtlosen Stromversorgung und Signalführung zu großen Schwierigkeiten und Meßunsicherheiten kommt.

Der Erfindung liegt daher die Aufgabe zugrunde, diese Mängel zu beseitigen und eine Überwachungseinrichtung der eingangs geschilderten Art zu schaffen, die ein rationelles und vor allem auch ständiges Kontrollieren der Betriebssicherheit von Dämpfern und Kupplungen einerseits und der auftretenden Drehwechselspannungen im Antriebsstrang anderseits gewährleistet.

Die Erfindung löst diese Aufgabe dadurch, daß dem Innenteil und dem Außenteil des Dämpfers bzw. der Kupplung jeweils wenigstens ein an einen Rechner angeschlossener Meßwertgeber zur Bestimmung der absoluten Verdrehung von Innen- bzw. Außenteil zugeordnet ist, welcher Rechner einerseits die eingelesenen Meßwerte des mit der Abtriebswelle verbundenen Teils, vorzugsweise der Innenteil, als Istmaß für die Drehwechselspannung der Abtriebswelle mit einem eingespeicherten Spannungs-Grenzwert und/oder anderseits die eingelesenen Meßwerte von Innen- und Außenteil voneinander subtrahiert und den Differenzwert als Istmaß für den Federweg der Federelemente mit einem eingespeicherten Federweg-Grenzwert vergleicht und beim Überschreiten des einen und/ oder anderen Grenzwertes ein Alarmsignal od. dgl. auslöst.

Da die Drehwechselspannungen in der Abtriebswelle, beispielsweise in der Propellerwelle, zumindest im Bereich der bei diesen Antriebsanlagen auftretenden Schwingungszustände proportional dem Absolutwert der Verdrehung dieser Welle am freien Wellenende, also am Vorderende der Kurbelwelle oder an dem damit verbundenen Dämpfer- oder Kupplungsteil sind, was sich rechnerisch leicht nachweisen läßt, kann durch die Erfassung dieser absoluten Verdrehung auf die auftretenden Drehwechselspannungen rückgeschlossen werden, wozu ein diese Verdrehung berührungsfrei bestimmender Meßwertgeber und ein entsprechender Rechner genügen. Der maschinen- oder gehäusefest angeordnete Geber ist schwierigkeitslos zu installieren und mit dem Rechner zu verdrahten, so daß auf einfache Weise eine ständige Überwachung der Drehwechselspannungen erreichbar ist. Wird dabei dem Rechner ein kritischer Grenzwert eingespeichert, der sich durch Rechnung oder Messung ermitteln läßt, kann bei Überschreiten dieses Grenzwertes automatisch ein Alarmsignal ausgelöst und auf das Überschreiten dieses Grenzwertes aufmerksam gemacht werden.

Um die Betriebssicherheit der Dämpfer bzw. Kupplungen zu überwachen, bei denen der Federweg, sei es die Durchbiegung von Stahlfedern, das Zusammendrücken von Gummifedern od. dgl., zur Beseitigung der Bruch- oder Beschädigungsgefahr, einen bestimmten Grenzwert nicht überschreiten darf, werden durch den zweiten Meßwertgeber zusätzlich zu den absoluten Verdrehwerten des Innenteils die absoluten Verdrehwerte des Außenteils erfaßt, deren Differenz als Maß für die relative Verdrehung zwischen Innen- und Außenteil und damit als Maß für den dazu proportionalen Federweg heranziehbar ist. Der Rechner kann daher laufend diesen Differenzwert bilden und mit einem entsprechend eingespeicherten, vorher rechnerisch oder versuchsmäßig ermittelten Grenzwert vergleichen, so daß sich auch hier der Betriebszustand des Dämpfers bzw. der Kupplung kontrollieren läßt. Die erfindungsgemäße Überwachungseinrichtung erlaubt daher eine ständige Überwachung sowohl des Betriebszustandes des Dämpfers oder der Kupplung als auch der Einhaltung zulässiger Drehwechselspannungen in den Abtriebsteilen.

Um auf einfache Weise die Absolutbeträge der Verdrehungen von Innen- und Außenteil bestimmen zu können, sind als Meßwertgeber induktive Geber beziehungsweise optische Geber vorgesehen, die mit einem Kranz von Ausnehmungen od. dgl. beziehungsweise einem kranzförmigen Strichmuster am zugehörenden Innen- bzw. Außenteil zusammenwirken, so daß auf berührungsfreiem Wege exakte Daten dem Rechner eingelesen werden können.

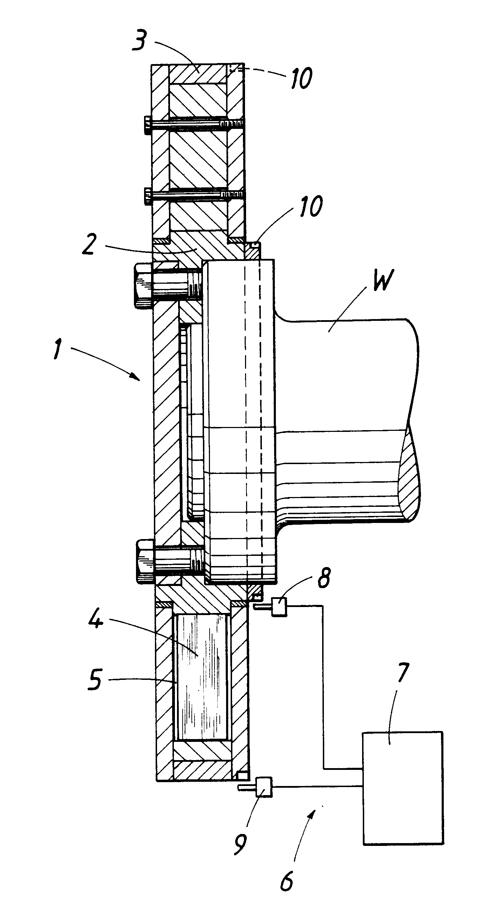

In der Zeichnung ist der Erfindungsgegenstand beispielsweise an Hand einer schematischen Darstellung einer erfindungsgemäßen Überwachungseinrichtung näher veranschaulicht.

Eine lediglich mit dem freien Ende einer Kurbelwelle W angedeutete Antriebsanlage umfaßt einen Drehschwingungsdämpfer 1, der aus einem auf der Kurbelwelle W drehfest angeflanschten Innenteil 2 und einem relativ zum Innenteil verdrehbar gelagerten Außenteil 3 besteht. Zwischen Innen- und Außenteil 2, 3 sind zur Drehmomentenübertragung Federelemente 4 eingespannt, wobei in den zwischen Innen- und Außenteil 2, 3 und Federelementen 4 gebildeten Kammern 5 eingefülltes Öl auf Grund seiner Verdrängung bei einer Relativverdrehung von Innen- und Außenteil 2, 3 und der damit zusammenhängenden Federelementendurchbiegung die gewünschte Dämpfung ergibt.

Um nun dauernd die Betriebssicherheit des Drehschwingungsdämpfers 1 und die auftretenden Drehwechselspannungen in der Kurbelwelle W oder dem anschließenden Wellenstrang überwachen zu können, gibt es eine Überwachungseinrichtung 6, die einen Rechner 7 und zumindest zwei Meßwertgeber 8, 9 aufweist. Die als induktive oder optoeleketrische Geber ausgebildeten Meßwertgeber 8, 9 sind jeweils dem Innenteil 2 und dem Außenteil 3 zugeordnet und wirken zur Bestimmung der absoluten Verdrehung des zugehörenden Teils mit einem nur angedeuteten Kranz von Ausnehmungen 10, beispielsweise entlang eines Kreises angeordnete Bohrungen, Zahnlücken eines Zahnrades u.dgl., oder mit einem kranzförmigen Strichmuster zusammen. Sie lesen diese Verdrehwerte dem Rechner 7 ein, der nun aus den Verdrehwerten des Meßwertgebers 8 für den Innenteil 2 die dazu proportionalen Drehwechselspannungen der Welle W od. dgl. bestimmt und sie mit einem eingespeicherten Grenzwert vergleicht, so daß bei Überschreiten dieses Grenzwertes ein Alarmsignal ausgelöst werden kann. Gleichzeitig damit werden die über beide Geber 8, 9 eingelesenen Verdrehwerte für den Innenund Außenteil voneinander subtrahiert, welche Differenz ein Maß für die Relativverdrehung zwischen den beiden Teilen 2, 3 und damit auch ein Maß für die Durchbiegung der Federelemente 4 darstellt. Auch hier läßt sich durch Vergleich mit einem eingespeicherten Grenzwert eine unzulässige Überschreitung der Federbelastung erkennen und für eine rechtzeitige Alamierung sorgen.

Die erfindungsgemäße Überwachungseinrichtung 6 ermöglicht es daher, auf einfache, rationelle und sichere Weise eine Antriebsanlage dauernd auf drehschwingungsbedingte Zustandsgrößen hin zu überwachen, so daß eine Überlastung der Antriebsteile nicht zu befürchten ist und die Voraussetzungen für das Einhalten der erwarteten Lebenszeiten geschaffen werden können.

## Patentansprüche

1. Überwachungseinrichtung zur Überwachung drehschwingungsbedingter Zustandsgrößen einer einen Drehschwingungsdämpfer (1) bzw. eine drehelastische Kupplung umfassenden Antriebsanlage, welcher Dämpfer (1) bzw. welche Kupplung zwischen relativ zueinander verdrehbaren Innen- und Außenteilen (2, 3) angeordnete Federelemente (4) aufweisen, dadurch gekennzeichnet, daß dem Innenteil (2) und dem Außenteil (3) des Dämpfers (1) bzw. der Kupplung jeweils wenigstens ein an einen Rechner (7) angeschlossener Meßwertgeber (8, 9) zur Bestimmung der absoluten Verdrehung von Innen- bzw. Außenteil (2, 3) zugeordnet ist, welcher Rechner (7) einerseits die eingelesenen Meßwerte des mit der Abtriebswelle verbundenen Teils, vorzugsweise der Innenteil (2), als Istmaß für die Drehwechselspannung der Abtriebswelle mit einem eingespeicherten Spannungs-Grenzwert und/oder anderseits die eingelesenen Meßwerte von Innen- und Außenteil voneinander subtrahiert und den Differenzwert als Istmaß für den Federweg der Federelemente (4) mit einem eingespeicherten Federweg-Grenzwert vergleicht und beim Überschreiten des einen und/oder anderen Grenzwertes ein Alarmsignal od. dgl. auslöst.

2. Überwachungseinrichtung nach Anspruch 1, dadurch gekennzeichnet, daß als Meßwertgeber (8, 9) induktive Geber vorgesehen sind, die mit einem Kranz von Ausnehmungen (10) od. dgl. am zugehörenden Innen- bzw. Außenteil (2, 3) zusammenwirken.

3. Überwachungseinrichtung nach Anspruch 1, dadurch gekennzeichnet, daß als Meßwertgeber (8, 9) optische Geber vorgesehen sind, die mit einem kranzförmigen Strichmuster od. dgl. am zugehörenden Innen- bzw. Außenteil zusammenwirken.